Europäisches Patentamt

European Patent Office

Office européen des brevets

(11) Veröffentlichungsnummer: **0 542 109 A2**

## (12) EUROPÄISCHE PATENTANMELDUNG

(21) Anmeldenummer: **92118836.3**

(22) Anmeldetag: **04.11.92**

(51) Int. Cl.5: **B65G 1/14**

(30) Priorität: **11.11.91 DE 4137119**

(43) Veröffentlichungstag der Anmeldung:
**19.05.93 Patentblatt 93/20**

(84) Benannte Vertragsstaaten:
**DE ES FR GB IT SE**

(71) Anmelder: **Croon & Lucke Maschinenfabrik GmbH**
**Flachstrasse 14**
**W−7947 Mengen(DE)**

(72) Erfinder: **Schöller, Heinz**
**Unter dem Staffel 22**
**W−7703 Rielasingen/Worblingen(DE)**

(74) Vertreter: **Weiss, Peter, Dr. rer.nat.**
**Dr. Peter Weiss & Partner Postfach 12 50**
**Zeppelinstrasse 4**
**W−7707 Engen/Hegau (DE)**

(54) Klinkenhebel für eine Stapelsäule zum Lagern von Lagergüter.

(57) Bei einem Klinkenhebel für eine Stapelsäule zum Lagern von Lagergütern aus einem Steuerhebel (3) und einem Tragarm (4) mit Tragflächen (6), die jeweils einerseits einer Drehachse angeordnet sind, soll den Tragarm (4) bzw. der Tragfläche (6) ein Aufsteckclip (11) aufgeschoben sein.

Fig. 1

EP 0 542 109 A2

Die vorliegende Erfindung betrifft einen Klinkenhebel für eine Stapelsäule zum Lagern von Lagergütern aus einem Steuerhebel und einem Tragarm mit Tragflächen, die jeweils einerseits einer Drehachse angeordnet sind.

Derartige Klinkenhebel sind beispielsweise aus der DE−OS 38 11 310 bekannt. Sie befinden sich in der Regel in einer waagrecht oder senkrecht angeordneten Stapelsäule, wobei aufeinanderfolgende Klinkenhebel zusammenwirken. Beim Einsetzen eines Lagergutes wird ein Klinkenhebel in eine Arbeitsstellung, der darüber angeordnete Klinkenhebel in eine Bereitschaftsstellung gebracht, während sich die nächsten Klinkenhebel noch in Ruhestellung befinden.

Ein derartiger Klinkenhebel ist in der Regel aus Aluminium hergestellt, d.h., er wird scheibchenweise von einem stranggepreßten Aluminiumprofil abgeschnitten. Aluminium ist dafür ein kostengünstiger Werkstoff, weist allerdings Nachteile auf. Insbesondere ist Aluminium nicht abriebfest. Werden auf derartige Aluminiumklinkenhebel scharfkantige Lagergüter aus Stahl gelegt, so kommt es zu Beschädigungen der Tragarme.

Ferner können beispielsweise geringere Änderungen in der Bemaßung eines Lagergutes dazu führen, daß eine bestimmte Stapelsäule nicht mehr anwendbar ist, weil beispielsweise die Klinkenhebel auch in Arbeitsstellung eine zu große Entfernung voneinander aufweisen.

Aus der DE−PS 36 19 069 ist ein weiterer Klinkenhebel der o.g. Art bekannt, bei welchem sich auf dem Tragarm ein Gummipuffer befindet. Dieser Gummipuffer schützt zwar das Lagergut vor Beschädigungen, jedoch nicht den Tragarm vor Beschädigungen durch das Lagergut. Ferner kann auch er unterschiedlichen Bemaßungen des Lagergutes nicht Rechnung tragen.

Der vorliegenden Erfindung liegt die Aufgabe zugrunde, einen Klinkenhebel der o.g. Art weiterzuentwickeln, bei welchem die genannten Nachteile nicht auftreten und es insbesondere weder zu einer Beschädigung des Klinkenhebels noch zu einer Beschädigung des Lagergutes kommt.

Zur Lösung dieser Aufgabe führt, daß dem Tragarm bzw. der Tragfläche ein Aufsteckclip aufgeschoben ist.

Dieser Aufsteckclip soll bevorzugt aus einem anderen Werkstoff bestehen, als der Klinkenhebel aus Aluminium. Hierdurch kann weiterhin der Klinkenhebel billig aus Aluminum hergestellt werden, während das teurere Material für den Aufsteckclip verwendet wird, der jedoch wenig Material beansprucht.

In einem bevorzugten Ausführungsbeispiel soll der Aufsteckclip aus einem rostfreien Werkstoff 4301 (Federstahl) bestehen. Dieser Federstahl hat eine wesentlich höhere Festigkeit und wird auch bei scharfkantigen Lagergütern aus Stahl nicht beschädigt. Ferner ist er rostfrei, so daß auch keine negativen Auswirkungen auf das Lagergut zu befürchten sind.

Ein weiteres bevorzugtes Material ist ein galvanisch verzinkter Federstahl, der ähnliche Wirkungen hat.

In einem einfachen Ausführungsbeispiel besteht der Aufsteckclip aus zwei über einen Bogen miteinander verbundenen Schenkel, wobei der eine Schenkel eine Oberfläche des Tragarmes über− und der andere Schenkel eine Unterfläche des Tragarmes untergreift. Hierdurch entsteht ein Überzug, der den Tragarm schützt.

Der Festlegung dieses Aufsteckclips auf dem Tragarm bzw. an der Tragfläche dienen der Einfachheit halber eingeformte Sicken, welche mit entsprechenden Rastnasen des Aufsteckclips zusammenwirken. Sicken werden deshalb gewählt, weil sie auch einem Strangpressprofil bereits bei dessen Herstellung eingeformt werden können und somit keinen zusätzlichen Arbeitsgang benötigen. Selbstverständlich sind auch andere Festlegungsmöglichkeiten denkbar und sollen von dem vorliegenden Erfindungsgedanken umfaßt sein.

Damit ein derartiger Aufsteckclip nicht seitlich von den Tragarmen abgeschoben werden kann, soll er noch Seitenwangen besitzen, welche den Tragarm bzw. die Tragfläche seitlich übergreifen.

Ein weiterer wesentlicher Vorteil dieser Erfindung ist, daß der Aufsteckclip nicht etwa der Form der Tragfläche bzw. des Tragarmes angepaßt sein muß. So kann beispielsweise der Aufsteckclip ein ganzes Stück länger ausgebildet werden, so daß er quasi eine Verlängerung der Tragfläche des Klinkenhebels bildet. Hierdurch ist es auch möglich Lagergüter mit einer anderen Bemaßung durch gleich beabstandete Stapelsäulen einzulagern. Ferner ist es möglich, dem Aufsteckclip auch seitlich noch Vorsprünge od. dgl. anzuformen, je nach dem, was für ein Lagergut gehalten werden soll. Hier sind sehr viele Variationsmöglichkeiten denkbar, die von der vorliegenden Erfindung umfaßt sein sollen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Figur 1 einen Querschnitt durch einen erfindungsgemäßen Klinkenhebel;

Figur 2 eine Unteransicht des erfindungsgemäßen Klinkenhebels gemäß Figur 1.

Ein Klinkenhebel 1 weist eine Bohrung 2 für eine Drehachse auf, welche im vorliegenden Ausführungsbeispiel nicht näher gezeigt ist. Einerseits der Bohrung 2 bildet der Klinkenhebel 1 einen Steuerhebel 3,

EP 0 542 109 A2

andererseits einen Tragarm 4 aus.

Der Steuerhebel 3 besitzt eine Ausnehmung 5 für ein nicht näher gezeigtes Gewicht.

Wesentlicher Teil des Tragarmes 4 ist eine in Gebrauchslage etwa waagrecht abstehende Tragfläche 6, welche eine Oberfläche 7 zur Aufnahme bzw. zum Halten eines Lagergutes ausbildet. Der Oberfläche 7 liegt eine Unterfläche 8 gegenüber. Sowohl in die Oberfläche 7 als auch in die Unterfläche 8 ist jeweils eine Sicke 9 bzw. 10 eingeformt. Da der Klinkenhebel 1 normalerweise von einem entsprechenden Strangpreß − profil aus Aluminium abgeschnitten ist, dürfte es am günstigsten sein, wenn diese Sicken 9 und 10 bereits beim Strangpressen mit in das Profil eingeformt werden, d.h., daß entsprechende Ausformungen in dem Strangpreßwerkzeug vorhanden sind.

Erfindungsgemäß ist dieser Tragfläche 6 ein Aufsteckclip 11 aufgeschoben. Dieser Aufsteckclip 11 besitzt Rastnasen 12 und 13, welche mit den Sicken 9 und 10 zusammenwirken, so daß nach dem Aufstecken des Aufsteckclips 11 auf die Tragfläche 6 dieser Aufsteckclip 11 gehalten ist.

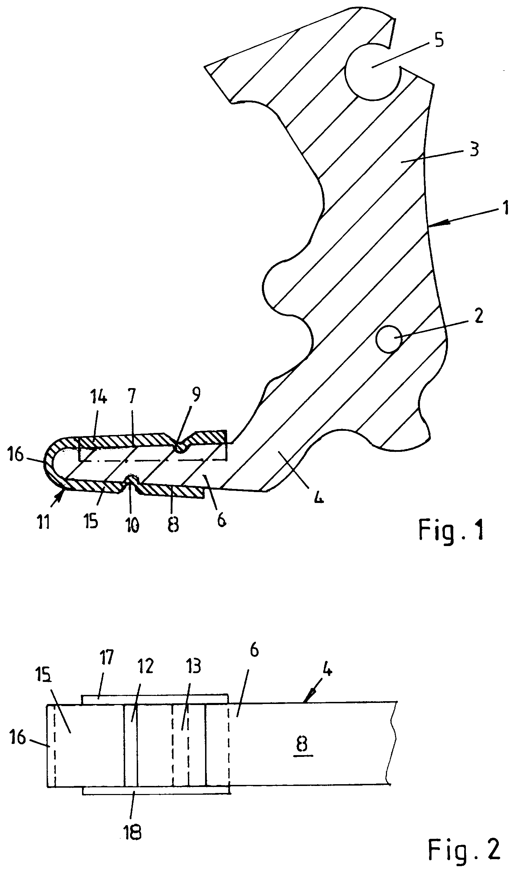

Im vorliegenden Ausführungsbeispiel besteht der Aufsteckclip 11 aus einem oberen Schenkel 14, welcher die Rastnase 13 besitzt und einem unteren Schenkel 15, welcher die Rastnase 12 aufweist. Beide Schenkel 14 und 15 sind durch einen Bogen 16 miteinander verbunden. Ferner sind vom oberen Schenkel 14 auch Seitenwangen 17 und 18 (siehe Figur 2) abgekantet. Diese Seitenwangen 17 und 18 dienen der besseren Halterung des Aufsteckclips 11 an der Tragfläche 6, damit dieser Aufsteckclip 11 nicht seitlich von der Tragfläche 6 abgeschoben werden kann. Während der Klinkenhebel 1 selbst bevorzugt aus Aluminium besteht, soll der Aufsteckclip 11 aus einem rostfreien Werkstoff 4301 (Federstahl) hergestellt sein. Es ist jedoch auch ein galvanisch verzinkter Federstahl oder ein anderes gewünschtes Metall möglich.

3

| P O S I T I O N S Z A H L E N L I S T E | | | | | |
|---|---|---|---|---|---|
| 1 | Klinkenhebel | 34 | | | |
| 2 | Bohrung | 35 | | | |
| 3 | Steuerhebel | 36 | | | |
| 4 | Tragarm | 37 | | | |
| 5 | Ausnehmung | 38 | | | |
| 6 | Tragfläche | 39 | | | |
| 7 | Oberfläche | 40 | | | |
| 8 | Unterfläche | 41 | | | |
| 9 | Sicke | 42 | | | |
| 10 | " | 43 | | | |
| 11 | Aufsteckclip | 44 | | | |
| 12 | Rastnase | 45 | | | |
| 13 | " | 46 | | | |
| 14 | oberer Schenkel | 47 | | | |
| 15 | unterer " | 48 | | | |
| 16 | Bogen | 49 | | | |
| 17 | Seitenwange | 50 | | | |
| 18 | " | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Klinkenhebel für ein Stapelsäule zum Lagern von Lagergütern aus einem Steuerhebel und einem Tragarm mit Tragflächen, die jeweils einerseits einer Drehachse angeordnet sind,
dadurch gekennzeichnet,
daß dem Tragarm (4) bzw. der Tragfläche (6) ein Aufsteckclip (11) aufgeschoben ist.

2. Klinkenhebel nach Anspruch 1, dadurch gekennzeichnet, daß der Klinkenhebel (1) aus Aluminium und der Aufsteckclip (11) aus einem anderen Werkstoff besteht.

3. Klinkenhebel nach Anspruch 2, dadurch gekennzeichnet, daß der Aufsteckclip (11) aus rostfreiem Federstahl besteht.

4. Klinkenhebel nach Anspruch 2, dadurch gekennzeichnet, daß der Aufsteckclip (11) aus galvanisch verzinktem Federstahl besteht.

5. Klinkenhebel nach wenigstens einem der Ansprüche 1 bis 4, dadurch gekennzeichnet, daß der Aufsteckclip (11) aus zwei über einen Bogen (16) miteinander verbundenen Schenkeln (14, 15) besteht, wobei ein oberer Schenkel (14) eine Oberfläche (7) des Tragarms (4) über – und ein unterer Schenkel (15) eine Unterfläche (8) des Tragarms (4) untergreift.

6. Klinkenhebel nach Anspruch 5, dadurch gekennzeichnet, daß in die Tragfläche (6) zumindest eine Sicke (9, 10) eingeformt ist, welche mit einer Rastnase (12, 13) in dem Aufsteckclip (11) zusammen – wirkt.

7. Klinkenhebel nach Anspruch 6, dadurch gekennzeichnet, daß zumindest einem Schenkel (14, 15) seitlich noch Seitenwangen (17, 18) angeformt sind.

Fig. 1

Fig. 2